# EUROPÄISCHE PATENTSCHRIFT

(11) **EP 3 642 211 B1**
(45) Veröffentlichungstag und Bekanntmachung des Hinweises auf die Patenterteilung: **05.04.2023**
(21) Anmeldenummer: 18730380.5
(22) Anmeldetag: 19.06.2018
(51) Int. Cl.: C07F 7/08, C07F 7/10, C08G 18/28, C09J 175/02, C07F 7/18, C09J 175/04

(54) **ALDIMINOSILANE**
ALDIMINOSILANES
ALDIMINOSILANES

(30) Priorität: 19.06.2017 EP 17176685
(43) Veröffentlichungstag der Anmeldung: 29.04.2020
(73) Patentinhaber: Sika Technology AG, 6340 Baar (CH)
(72) Erfinder: BURCKHARDT, Urs, 8049 Zürich (CH); KRAMER, Andreas, 8008 Zürich (CH)
(74) Vertreter: Sika Patent Attorneys
(86) Internationale Anmeldenummer: PCT/EP2018/066176
(87) Internationale Veröffentlichungsnummer: WO 2018/234266

(56) Entgegenhaltungen:
- WO-A1-2015/003875
- WO-A2-2005/058921
- DE-A1- 3 414 877

## Beschreibung

### Technisches Gebiet

Die Erfindung betrifft Aldiminosilane und härtbare Zusammensetzungen enthaltend diese, insbesondere Polyurethane, sowie Klebstoffe, Dichtstoffe und Beschichtungen.

### Stand der Technik

Aminosilane (aminofunktionelle Organoalkoxysilane) sind bekannte Haftvermittler und/oder Vernetzer. Sie werden oft in Aktivatoren, Primern, Klebstoffen, Dichtmassen, Belägen oder Beschichtungen in der Bau- und Fertigungsindustrie eingesetzt. Aminosilane mit primären Aminogruppen sind aufgrund ihrer einfachen Herstellbarkeit am meisten verbreitet. Sie weisen aber Nachteile auf. Aufgrund der relativ hydrophilen Aminogruppe neigen sie zu unerwünschter Feuchtigkeitsaufnahme, was sich negativ auf die Haftung einer ausgehärteten Masse zum Untergrund auswirken kann. Zum anderen sind sie stark basisch und neigen dadurch unter Feuchtigkeitseinfluss zu rascher Selbstkondensation, was ihre molekulare Mobilität und somit auch ihre haftvermittlende Wirkung in einer dickschichtig applizierten Masse herabsetzt. Schliesslich können sie aufgrund der Reaktivität der Aminogruppe nicht oder nur sehr eingeschränkt in Zusammensetzungen eingesetzt werden, die elektrophile Reaktivgruppen wie Isocyanat- oder Epoxidgruppen aufweisen, da sie chemisch gebunden werden und dadurch die haftvermittelnde Wirkung weitgehend verlieren und/oder die Lagerstabilität der Zusammensetzung negativ beeinflussen. Es kann deshalb vorteilhaft sein, die primäre Aminogruppe solcher Aminosilane in geeigneter Weise zu modifizieren.

Bekannt ist die Umsetzung mit Aldehyden oder Ketonen zu Iminosilanen, wobei die primäre Aminogruppe so blockiert wird, dass sie ihre Basizität und Nucleophilie weitgehend verliert. Mittels Feuchtigkeit hydrolysiert die Iminogruppe wieder zur Aminogruppe und der Aldehyd oder das Keton wird freigesetzt.

Die aus dem Stand der Technik bekannten Iminosilane weisen aber Nachteile auf. Meist werden als Blockierungsmittel flüchtige und geruchsintensive Aldehyde oder Ketone verwendet. Solche Iminosilane hydrolysieren bei Zutritt von Feuchtigkeit meist sehr schnell und setzen dabei das flüchtige und geruchsintensive Blockierungsmittel frei. Sie sind deshalb nicht geeignet für den Einsatz in lösemittelarmen oder -freien Produkten, welche bei der Aushärtung keine intensiven Gerüche und flüchtigen Verbindungen freisetzen sollen.

WO 2005/058921 beschreibt Aldiminosilane erhalten aus Aminosilanen und langkettigen, Estergruppen-haltigen aliphatischen Aldehyden, und ihre Verwendung als Haftvermittler in Polyurethanzusammensetzungen. Diese Iminosilane verursachen bei der Hydrolyse zwar keine Geruchsbelastung, sie sind aber temperaturempfindlich und deshalb nur eingeschränkt haltbar. Zudem hydrolysieren sie unter Feuchtigkeitseinfluss sehr schnell, was ihre haftvermittelnde Wirkung in dickschichtig applizierten Polyurethanzusammensetzungen einschränkt. Weiterhin neigt der freigesetzte unflüchtige Aldehyd zum Ausschwitzen, was die Haftung auf Zusammensetzungen, die solche Aldiminosilane enthalten, empfindlich stören kann.

WO 2015/003875 beschreibt eine Zusammensetzung auf Basis Silanfunktioneller Polymere enthaltend ein Iminosilan. Dabei ist die Lagerstabilität gegenüber der Verwendung von entsprechenden Aminosilanen verbessert, wobei die Aushärtungsgeschwindigkeit trotzdem hoch ist. In bevorzugten Ausführungsformen besitzen die Hydrolyseprodukte des Iminosilans gute Dufteigenschaften. Ebenfalls offenbart ist die Verwendung der Iminosilane als Haftvermittler. Bevorzugt als Aldehyde für die Herstellung des Iminosilans sind Benzaldehyd, Tolualdehyd, Anisaldehyd (p-Methoxybenzaldehyd), Acetophenon oder Benzophenon.

DE 34 14 877 beschreibt einkomponentige Polyurethanzusammensetzungen enthaltend ein Iminosilan als Haftvermittler. Das Iminosilan ist abgeleitet von aliphatischen oder aromatischen Aldehyden mit 2 bis 20 C-Atomen. Bevorzugt sind Aldehyde mit 4 bis 10 C-Atomen.

### Darstellung der Erfindung

Aufgabe der vorliegenden Erfindung ist es daher, ein Iminosilan zur Verfügung zu stellen, welches die Nachteile des Standes der Technik überwindet.

Diese Aufgabe wird mit dem Aldiminosilan der Formel (I), wie in Anspruch 1 beschrieben, gelöst. Seine spezielle Struktur ist verantwortlich für eine ganze Reihe von überraschenden Eigenschaften des Aldiminosilans selbst und von damit erhaltenen härtbaren Zusammensetzungen.

Das Aldiminosilan der Formel (I) ist geruchlos, bei Raumtemperatur flüssig und vergleichsweise niedrigviskos, selbst dann, wenn der zugrunde liegende Aldehyd bei Raumtemperatur fest ist. Dies ist sehr überraschend, da Aldimine von aromatischen Aldehyden bei Raumtemperatur oft Feststoffe darstellen. Seine Hydrolyse verläuft vergleichsweise langsam, was sich äusserst positiv auf die Wirksamkeit als Haftvermittler in härtbaren Zusammensetzungen auswirkt, da es lange mobil bleibt und somit Zeit hat, aus dem Innern einer dickschichtig applizierten Zusammensetzung an die Grenzfläche zu den Substraten zu gelangen. Weiterhin weist das Aldiminosilan eine ausgezeichnete Verträglichkeit mit härtbaren Zusammensetzungen auf Basis von Isocyanaten, Epoxiden oder Silanen auf, wodurch solche Zusammensetzungen nach der Aushärtung keine Neigung zu Migrationseffekten wie Ausschwitzen oder Substratverschmutzung zeigen. Dies ist sehr überraschend, zum einen, weil der aus dem Aldiminosilan freigesetzte Aldehyd unflüchtig ist und in der Zusammensetzung verbleibt, ein vergleichsweise hohes Molekulargewicht aufweist und somit zu einem vergleichsweise hohen Gewichtsanteil enthalten ist, und zum anderen, weil dessen ausgesprochen hydrophober Alkyl- oder Alkoxy-Substituent eine eher schlechte Verträglichkeit mit hydrophilen, Wasserstoffbrücken aufweisenden Polymergerüsten wie Polyurethanen oder Polyepoxiden erwarten liesse.

Das Aldiminosilan der Formel (I) ermöglicht Primerzusammensetzungen mit einer grossen Bandbreite an möglichen Ablüftzeiten, insbesondere auch sehr lange Ablüftzeiten von einigen Tagen bis Wochen. Bei sehr langen Ablüftzeiten wird mit Aldiminosilanen nach dem Stand der Technik, welche schwerflüchtige Aldehyde freisetzen, oft eine eingeschränkte Haftung von darauf applizierten Zusammensetzungen beobachtet.

Isocyanatgruppen-haltige Zusammensetzungen enthaltend das Aldiminosilan der Formel (I) sind unabhängig von der Lagertemperatur und dem eingesetzten Isocyanat sehr lagerstabil. Dies ist überraschend, da im Stand der Technik beschriebene, Benzaldehyde freisetzende Aldiminosilane eine eingeschränkte Lagerstabilität aufweisen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Aldiminosilan der Formel (I), 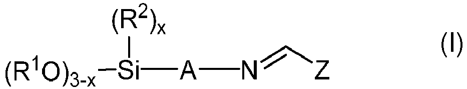 wobei
x für 0 oder 1 oder 2 steht,
R¹ für einen einwertigen, gegebenenfalls Ethergruppen aufweisenden aliphatischen oder cycloaliphatischen oder arylaliphatischen Kohlenwasserstoff-Rest mit 1 bis 12 C-Atomen steht,
R² für einen einwertigen Kohlenwasserstoff-Rest mit 1 bis 12 C-Atomen steht, A für einen gegebenenfalls Ether-Sauerstoff oder Amin-Stickstoff aufweisenden Alkylen-Rest mit 1 bis 12 C-Atomen steht, und
Z für einen mit einer Alkyl- oder Alkoxy-Gruppe substituierten Aryl-Rest mit insgesamt 12 bis 26 C-Atomen steht,
dadurch gekennzeichnet, dass Z für einen Rest der Formel (II) steht, 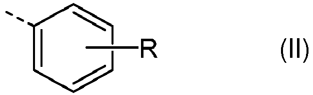
wobei R ausgewählt ist aus mehrheitlich verzweigten 4-Decyl-, 4-Undecyl-, 4-Dodecyl-, 4-Tridecyl- und 4-Tetradecyl-Resten.

Als "Silan" werden Organoalkoxysilane, welche eine bis drei organische Substituenten an der Alkoxysilangruppe tragen, bezeichnet. Silane, die an einem organischen Rest zusätzlich zur Silangruppe eine oder mehrere Amino-, Aldimino- oder Epoxid-Gruppen tragen, werden als "Aminosilan", "Aldiminosilan" oder "Epoxysilan" bezeichnet.

Als "Silangruppe" wird eine an einen organischen Rest gebundene Silylgruppe mit einem bis drei, insbesondere zwei oder drei, Alkoxy-Resten am SiliciumAtom bezeichnet.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird üblicherweise mittels Gelpermeationschromatographie (GPC) gegen Polystyrol als Standard bestimmt.

Eine gestrichelte Linie in den Formeln stellt jeweils die Bindung zwischen einem Substituenten und dem zugehörigen Molekülrest dar.

Mit "Poly" beginnende Substanznamen wie Polyamin, Polyol oder Polyisocyanat bezeichnen Substanzen, die formal zwei oder mehr der in ihrem Namen vorkommenden funktionellen Gruppen pro Molekül enthalten.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23°C bezeichnet.

Bevorzugt steht x für 0 oder 1, insbesondere für 0.

R¹ steht bevorzugt für einen gegebenenfalls Ethergruppen aufweisenden Alkyl-Rest mit 1 bis 10 C-Atomen.

R¹ steht besonders bevorzugt für Methyl oder Ethyl.

Dabei weisen Methoxygruppen aufweisende Aldiminosilane den Vorteil auf, dass sie besonders reaktiv sind.

Ethoxygruppen aufweisende Aldiminosilane weisen den Vorteil auf, dass sie etwas weniger reaktiv sind, was ihre Herstellung vereinfacht und ihre Haftverbessernde Wirkung verstärken kann, und sie sind toxikologisch vorteilhaft.

R² steht bevorzugt für einen Alkyl-Rest mit 1 bis 8 C-Atomen, insbesondere für Methyl.

Die bevorzugten Silangruppen sind besonders reaktiv und ermöglichen besonders gute Haftungen.

A steht bevorzugt für einen gegebenenfalls eine oder zwei sekundäre Aminogruppen aufweisenden Alkylen-Rest mit 1 bis 8 C-Atomen.

Insbesondere ist A ausgewählt aus der Gruppe bestehend aus Methylen, 1,3-Propylen, 4-Aza-1,6-hexylen, 4,7-Diaza-1,9-nonylen, 2-Methyl-1,3-propylen, 1,4-Butylen, 3-Methyl-1,4-butylen und 3,3-Dimethyl-1,4-butylen, wobei die Nummerierung vom Siliciumatom ausgeht.

Besonders bevorzugt steht A für 1,3-Propylen oder 4-Aza-1,6-hexylen, wobei die Nummerierung vom Siliciumatom ausgeht.

Am meisten bevorzugt steht A für 1,3-Propylen.

Die bevorzugten Reste A sind besonders einfach verfügbar und ermöglichen besonders gute Haftungen.

Z steht für einen Rest der Formel (II), 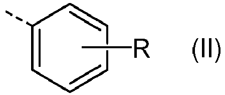 wobei R ausgewählt ist aus mehrheitlich verzweigten 4-Decyl-, 4-Undecyl-, 4-Dodecyl-, 4-Tridecyl- und 4-Tetradecyl-Resten.

Ein solches Aldiminosilan ist besonders niedrigviskos.

R steht insbesondere für einen verzweigten Alkyl-Rest mit 10 bis 14 C-Atomen.

Ganz besonders bevorzugt steht R für einen Rest der Formel 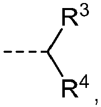 wobei R³ und R⁴ jeweils für einen Alkyl-Rest stehen und zusammen 9 bis 13 C-Atome aufweisen.

R steht in para-Stellung.

Am meisten bevorzugt steht Z somit für einen Rest der Formel (II a), 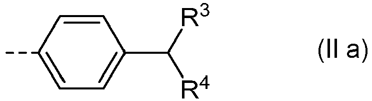 wobei R³ und R⁴ die genannten Bedeutungen aufweisen.

Die bevorzugten Reste Z sind besonders gut zugänglich und ermöglichen Aldiminosilane der Formel (I), welche bei Raumtemperatur flüssig und besonders niedrigviskos sind.

Das Aldiminosilan der Formel (I) wird bevorzugt erhalten aus der Umsetzung von mindestens einem Aminosilan der Formel (III) mit mindestens einem Aldehyd der Formel (IV) in einer Kondensationsreaktion unter Entfernung von Wasser, 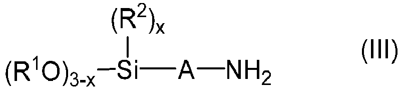 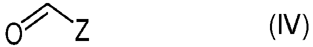 wobei x, R¹, R², A und Z die bereits beschriebenen Bedeutungen aufweisen.

Dabei wird der Aldehyd der Formel (IV) bevorzugt in Form eines technischen Gemisches aus Molekülen mit verschiedenen Resten Z eingesetzt.

Ein weiterer Gegenstand der Erfindung ist ein Verfahren zur Herstellung des Aldiminosilans der Formel (I), bei welchem
- das Aminosilan der Formel (III) mit dem Aldehyd der Formel (IV) zu einer Reaktionsmischung vereint wird, wobei der Aldehyd in Bezug auf die primäre Aminogruppe des Aminosilans stöchiometrisch oder im stöchiometrischen Überschuss eingesetzt wird,
- und das Kondensationswasser mit einer geeigneten Methode aus der Reaktionsmischung entfernt wird, gegebenenfalls unter deren Erwärmen.

Bevorzugt wird das Kondensationswasser mittels Anlegen von Vakuum aus der erwärmten Reaktionsmischung physikalisch oder chemisch entfernt, insbesondere durch Destillation unter Vakuum, mittels anorganischen Wasserbindern wie zum Beispiel Molekularsieben, Natrium- oder Magnesiumsulfaten oder Calciumoxid, oder mittels organischen Trocknungsmitteln wie zum Beispiel Orthoameisensäureestern, Vinyltrialkoxysilanen oder Orthosilicaten.

Die aus diesem Verfahren erhaltenen Aldiminosilane der Formel (I) enthalten typischerweise Anteile von oligomeren Aldiminosilanen, welche durch Hydrolyse- und Kondensationsreaktionen der Silangruppen mit dem aus der Iminkondensation anfallenden Wasser entstehen.

Das Aldiminosilan der Formel (I) kann nach Wunsch auch gezielt partiell oder vollständig in oligomere Formen überführt werden, insbesondere durch Nachbehandlung in Anwesenheit von Wasser, wobei der durch Hydrolyse freigesetzte Alkohol bevorzugt entfernt wird.

Ein weiterer Gegenstand der Erfindung ist ein weiteres Verfahren zur Herstellung des Aldiminosilans der Formel (I), bei welchem
- der Aldehyd der Formel (IV) zuerst mit einem flüchtigen primären Monoamin zu einer Reaktionsmischung vereint wird, wobei der Aldehyd in Bezug auf die primäre Aminogruppe stöchiometrisch oder im stöchiometrischen Unterschuss eingesetzt wird,
- das Kondensationswasser und gegebenenfals der Amin-Überschuss mit einer geeigneten Methode aus der Reaktionsmischung entfernt wird, gegebenenfalls unter deren Erwärmen,
- dann das erhaltene Aldimin-Zwischenprodukt mit dem Aminosilan der Formel (III) zu einer Reaktionsmischung vereint wird, wobei das Aminosilan in Bezug auf die Aldiminogruppe des Aldimin-Zwischenprodukts stöchiometrisch oder im stöchiometrischen Überschuss eingesetzt wird,
- und schliesslich die Reaktionsmischung erwärmt wird und das dabei freigesetzte flüchtige primäre Monoamin und gegebenenfalls der Aminosilan-Überschuss mit einer geeigneten Methode aus der Reaktionsmischung entfernt wird, insbesondere unter Vakuum.

Dieses Verfahren ist etwas aufwändiger in der Durchführung, das daraus erhaltene Produkt ist dafür weitgehend oder vollständig frei von oligomeren Aldiminosilanen und deshalb besonders niedrigviskos und mobil.

Ein geeignetes flüchtiges primäres Monoamin für dieses Verfahren ist insbesondere Propylamin, Isopropylamin oder Butylamin.

Geeignete Aminosilane der Formel (III) sind insbesondere Aminomethyltrimethoxysilan, Aminomethyldimethoxymethylsilan, 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropyldimethoxymethylsilan, N-(2-Aminoethyl)-N'-[3-(trimethoxysilyl)propyl]ethylendiamin, 3-Amino-2-methylpropyl-trimethoxysilan, 3-Amino-2-methylpropyldimethoxymethylsilan, 4-Aminobutyl-trimethoxysilan, 4-Aminobutyldimethoxymethylsilan, 4-Amino-3-methylbutyl-trimethoxysilan, 4-Amino-3-methylbutyldimethoxymethylsilan, 4-Amino-3,3-dimethylbutyltrimethoxysilan, 4-Amino-3,3-dimethylbutyldimethoxymethylsilan oder deren Analoga mit Ethoxygruppen anstelle der Methoxygruppen am Silicium.

Bevorzugt sind 3-Aminopropyltrimethoxysilan, 3-Aminopropyltriethoxysilan, 3-Aminopropyldimethoxymethylsilan, N-(2-Aminoethyl)-3-aminopropyltrimethoxysilan, N-(2-Aminoethyl)-3-aminopropyltriethoxysilan oder N-(2-Aminoethyl)-3-aminopropyldimethoxymethylsilan. Diese Aminosilane sind besonders gut verfügbar und zeigen besonders gute Eigenschaften als Haftvermittler. Besonders bevorzugt ist 3-Aminopropyltrimethoxysilan, 3-Aminopropyltriethoxysilan oder 3-Aminopropyldimethoxymethylsilan.

Ein bevorzugter Aldehyd der Formel (IV) ist ein Aldehyd der Formel (IV a), wobei R die bereits beschriebenen Bedeutungen aufweisen.

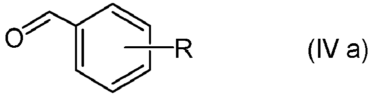

Ein besonders bevorzugter Aldehyd der Formel (IV) ist ein Aldehyd der Formel (IV b), wobei R³ und R⁴ die bereits beschriebenen Bedeutungen aufweisen.

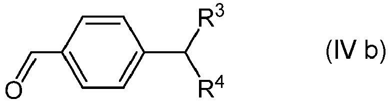

Die Aldehyde der Formel (IV) sind Benzaldehyde, ausgewählt aus 4-Decylbenzaldehyd, 4-Undecylbenzaldehyd, 4-Dodecylbenzaldehyd, 4-Tridecylbenzaldehyd, 4-Tetradecylbenzaldehyd, wobei die 4-Alkyl -Reste jeweils mehrheitlich verzweigt sind.

Als Aldehyd der Formel (IV) besonders bevorzugt sind Benzaldehyde, welche in 4-Stellung einen verzweigten C₁₀₋₁₄-Alkyl-Rest tragen, ausgewählt aus 4-Decylbenzaldehyd, 4-Undecylbenzaldehyd, 4-Dodecylbenzaldehyd, 4-Tridecylbenzaldehyd oder 4-Tetradecylbenzaldehyd.

Als Aldehyd der Formel (IV) am meisten bevorzugt ist ein Gemisch enthaltend 4-Decylbenzaldehyde, 4-Undecylbenzaldehyde, 4-Dodecylbenzaldehyde, 4-Tridecylbenzaldehyde und 4-Tetradecylbenzaldehyde, deren Alkyl-Reste mehrheitlich verzweigt sind.

Der Aldehyd der Formel (IV) ist insbesondere erhältlich aus der Formylierung von mindestens einem Alkyl-substituierten aromatischen Kohlenwasserstoff mit Kohlenmonoxid unter Einwirkung eines Säurekatalysators. Als Säurekatalysator eignet sich beispielsweise das System HCl-AlCl₃ (Gattermann-Koch-Reaktion).

In einem bevorzugten Herstellprozess wird die Formylierung mit HF-BF₃ als Säurekatalysator durchgeführt. Dies ist vorteilhaft, da dieses Verfahren besonders selektiv verläuft und der Aldehyd der Formel (IV) aus dem Reaktionsgemisch ohne Hydrolyseschritt abgetrennt und der Katalysator wiederverwendet werden kann, womit eine aufwendige Produktaufarbeitung und Abfallentsorgung entfällt.

Bevorzugt stellt das Aldiminosilan der Formel (I) ein Gemisch dar aus Aldiminosilanen der Formel (I), bei welchen Z jeweils für einen Rest der Formel (II) steht und R dabei ausgewählt ist aus mehrheitlich verzweigten 4-Decyl-, 4-Undecyl-, 4-Dodecyl-, 4-Tridecyl- und 4-Tetradecyl-Resten.

Ein weiterer Gegenstand der Erfindung ist somit ein Gemisch aus Aldiminosilanen der Formel (I), bei welchen Z jeweils für einen Rest der Formel (II) steht und R dabei ausgewählt ist aus mehrheitlich verzweigten 4-Decyl-, 4-Undecyl-, 4-Dodecyl-, 4-Tridecyl- und 4-Tetradecyl-Resten.

Ein solches Gemisch ist technisch besonders einfach zugänglich.

In einer bevorzugten Ausführungsform der Erfindung liegt das Aldiminosilan der Formel (I) als Teil einer Mischung mit mindestens einem Aldimin der Formel (V) vor, 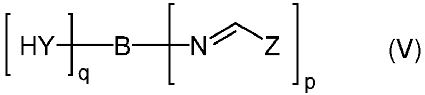 wobei
p für eine ganze Zahl von 1 bis 4, q für 0 oder 1 und (p+q) für eine ganze Zahl von 2 bis 4 stehen,
B für einen (p+q)-wertigen, gegebenenfalls Ether-Sauerstoff oder Amin-Stickstoff aufweisenden aliphatischen, cycloaliphatischen oder arylaliphatischen Kohlenwasserstoff-Rest mit einem Molekulargewicht im Bereich von 28 bis 6'000 g/mol steht,
Y für O, S oder NR⁰ steht, wobei R° für einen Wasserstoff-Rest oder einen einwertigen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder eine Aldiminogruppe der Formel 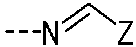 aufweist,
wobei Z die bereits beschriebenen Bedeutungen aufweist.

Bevorzugt steht q für 0 und p für 2 oder 3, insbesondere 2.

Die Komponenten der Mischung können dabei gemeinsam hergestellt werden, oder sie können separat hergestellt und anschliessend abgemischt werden. Bevorzugt ist dabei ein Verfahren, in dem das Aldiminosilan der Formel (I) wie im ersten Verfahren beschrieben in einem Aldimin der Formel (V) hergestellt wird.

Das Aldiminosilan der Formel (I) zeichnet sich dadurch aus, dass es geruchlos, pH-neutral, bei Raumtemperatur flüssig sowie wenig empfindlich gegenüber Wärme ist und somit besonders einfach gelagert, transportiert und verarbeitet werden kann.

Bei Kontakt mit Feuchtigkeit können die vorhandenen Silangruppen zu Silanolgruppen (Si-OH-Gruppen) hydrolysieren und können durch nachfolgende Kondensationsreaktionen Siloxangruppen (Si-O-Si-Gruppen) bilden.

Das Aldiminosilan der Formel (I) besitzt die Fähigkeit, eine starke Haftung zu diversen Substraten aufzubauen beziehungsweise den Haftungsaufbau einer Polymerzusammensetzung zu einem Substrat zu verbessern.

Das Aldiminosilan der Formel (I) kann als Wirkstoff oder als Zwischenprodukt in chemischen Verfahren verwendet werden.

Bevorzugt wird das Aldiminosilan der Formel (I) als Haftvermittler und/oder Vernetzer für härtbare Zusammensetzungen verwendet.

Ein weiterer Gegenstand der Erfindung ist die Verwendung von mindestens einem Aldiminosilan der Formel (I) als Haftvermittler und/oder Vernetzer.

Diese Verwendung zeichnet sich dadurch aus, dass das Aldiminosilan als Haftvermittler eine hohe Wirksamkeit besitzt, gerade auch in dickschichtig applizierten Zusammensetzungen, und schon in geringer Dosis eine gute Haftung zu diversen Substraten aufbauen kann. Dies kann dadurch begünstigt werden, dass das Aldiminosilan relativ langsam hydrolysiert, dadurch lange mobil bleibt und somit Zeit hat, um aus dem Innern einer Zusammensetzung an die Grenzfläche zu den Substraten zu gelangen. In Abwesenheit von Wasser bzw. Feuchtigkeit löst es keine Vernetzungsreaktionen der Reaktivgruppen, insbesondere Isocyanat- oder Epoxid- oder Silangruppen, aus und kann deshalb auch in Isocyanat- oder Epoxid- oder Silan-haltigen Verbindungen eingesetzt werden, ohne deren Haltbarkeit zu verkürzen. Das Aldiminosilan ist auch in Gegenwart von basischen Verbindungen, insbesondere solchen mit freien Aminogruppen, wie sie beispielsweise als Epoxid-Härter oder zur in situ-Thixotropierung von Polyurethanen verwendet werden, einsetzbar, da es keine basenempfindlichen Gruppen trägt. Der nach der Hydrolyse der Aldiminogruppe freigesetzte Aldehyd ist schwerflüchtig und verseifungsstabil und verursacht damit keine störende Geruchsbelastung. Zudem ist er gut verträglich mit vielen Polymeren, wodurch er weder ausschwitzt noch die Substrate verschmutzt.

In einer Ausführungsform der Erfindung wird das Aldiminosilan der Formel (I) als Bestandteil einer Haftvermittlerlösung oder eines Aktivators verwendet, welche zusätzlich mindestens ein Lösemittel und gegebenenfalls weitere Haftvermittler enthält.

Eine solche Haftvermittlerlösung wird als dünner Film auf ein Substrat aufgetragen, insbesondere mit einem Tuch oder Filz, und gegebenenfalls anschliessend wieder abgewischt, wobei das Substrat nach einer geeigneten Ablüftzeit mit einer härtbaren Zusammensetzung, insbesondere einem Klebstoff, beschichtet wird. Dabei verbessert diese Vorbehandlung des Substrats die Haftung des darauf applizierten Klebstoffs.

Um die Hydrolyse der Aldiminogruppen und/oder der Silangruppen zu beschleunigen, kann es vorteilhaft sein, das Aldiminosilan der Formel (I) mit geeigneten Katalysatoren zu kombinieren.

Ein weiterer Gegenstand der Erfindung ist eine Zusammensetzung umfassend
- mindestens ein Aldiminosilan der Formel (I), und
- mindestens ein Monomer und/oder Polymer mit vernetzungsfähigen Reaktivgruppen.

Eine solche Zusammensetzung wird auch als "härtbare Zusammensetzung" bezeichnet.

Die vernetzungsfähigen Reaktivgruppen sind insbesondere ausgewählt aus Isocyanatgruppen, Epoxidgruppen und Silangruppen.

Bevorzugt sind Isocyanatgruppen und/oder Silangruppen.

Besonders bevorzugt enthält die Zusammensetzung Isocyanatgruppen.

Am meisten bevorzugt ist die Zusammensetzung eine Isocyanatgruppen-haltige Zusammensetzung umfassend mindestens ein Polyisocyanat und/oder mindestens ein Isocyanatgruppen aufweisendes Polymer.

Als Polyisocyanat geeignet ist insbesondere ein im Handel erhältliches Polyisocyanat, insbesondere
- handelsübliche Diisocyanate, insbesondere 1,6-Hexamethylendiisocyanat (HDI), 1-Isocyanato-3,3,5-trimethyl-5-isocyanatomethylcyclohexan (IPDI), Perhydro-2,4'- und/oder -4,4'-diphenylmethandiisocyanat (H₁₂MDI), 2,4- oder 2,6-Toluylendiisocyanat oder beliebige Gemische dieser Isomeren (TDI), 4,4'- oder 2,4'- oder 2,2'-Diphenylmethandiisocyanat oder beliebigen Gemischen dieser Isomeren (MDI),
- bei Raumtemperatur flüssige Formen von MDI, insbesondere durch partielle chemische Modifizierung - insbesondere Carbodiimidisierung bzw. Uretoniminbildung oder Adduktbildung mit Polyolen - verflüssigtes 4,4'-MDI, oder durch Abmischen gezielt herbeigeführte oder durch den Herstellungsprozess bedingte Gemische von 4,4'-MDI mit anderen MDI-Isomeren (2,4'-MDI und/oder 2,2'-MDI), und/oder Gemische von MDI mit MDI-Oligomeren und/oder MDI-Homologen (polymeres MDI oder PMDI),
- Oligomere oder Derivate der genannten Isocyanate, insbesondere abgeleitet von HDI, IPDI, MDI oder TDI, insbesondere Oligomere enthaltend Uretdion- oder Isocyanurat- oder Iminooxadiazindion-Gruppen oder verschiedene dieser Gruppen; oder zwei- oder mehrwertige Derivate enthaltend Ester- oder Harnstoff- oder Urethan- oder Biuret- oder Allophanat- oder Carbodiimid- oder Uretonimin- oder Oxadiazintrion-Gruppen oder verschiedene dieser Gruppen. Solche Polyisocyanate stellen in der Praxis üblicherweise Gemische von Substanzen mit unterschiedlichen Oligomerisierungsgraden und/oder chemischen Strukturen dar. Insbesondere weisen sie eine mittlere NCO-Funktionalität von 2.1 bis 4.0 auf.

Ein besonders bevorzugtes Polyisocyanat ist HDI, IPDI, TDI oder MDI.

Am meisten bevorzugt ist IPDI, TDI oder MDI.

Ein geeignetes Isocyanatgruppen-haltiges Polyurethanpolymer wird insbesondere erhalten aus der Umsetzung von mindestens einem Polyol mit einer überstöchiometrischen Menge von mindestens einem Polyisocyanat. Die Umsetzung wird bevorzugt unter Feuchtigkeitsausschluss bei einer Temperatur im Bereich von 50 bis 160 °C durchgeführt, gegebenenfalls in Anwesenheit geeigneter Katalysatoren. Das NCO/OH-Verhältnis liegt bevorzugt im Bereich von 1.3/1 bis 5/1, bevorzugt 1.5/1 bis 4/1, insbesondere 1.8/1 bis 3/1. Das nach der Umsetzung der OH-Gruppen im Reaktionsgemisch verbleibende Polyisocyanat, insbesondere monomeres Diisocyanat, kann entfernt werden, insbesondere mittels Destillation, was im Fall eines hohen NCO/OH-Verhältnisses bevorzugt ist. Das erhaltene Polyurethanpolymer weist bevorzugt einen Gehalt an freien Isocyanatgruppen im Bereich von 1 bis 10 Gewichts-%, insbesondere 1.5 bis 6 Gewichts-%, auf. Gegebenenfalls kann das Polyurethanpolymer unter Mitverwendung von Weichmachern oder Lösemitteln hergestellt werden, wobei die verwendeten Weichmacher oder Lösemittel keine gegenüber Isocyanaten reaktive Gruppen enthalten.

Als Polyisocyanat zur Herstellung eines Isocyanatgruppen-haltigen Polyurethanpolymers bevorzugt sind die bereits genannten Polyisocyanate, insbesondere die Diisocyanate, insbesondere MDI, TDI, IPDI oder HDI.

Geeignete Polyole sind handelsübliche Polyole oder Mischungen davon, insbesondere
- Polyetherpolyole, insbesondere Polyoxyalkylendiole und/oder Polyoxyalkylentriole, insbesondere Polyoxypropylendiole oder Polyoxypropylentriole, oder sogenannte Ethylenoxid-terminierte (EO-endcapped) Polyoxypropylendiole oder-triole, oder solche mit darin dispergierten Polymerpartikeln, insbesondere mit Styrol-Acrylnitril-Partikeln (SAN),
- Polyesterpolyole, insbesondere aus der Polykondensation von Hydroxycarbonsäuren bzw. Lactonen oder aus der Polykondensation von aliphatischen und/oder aromatischen Polycarbonsäuren mit zwei- oder mehrwertigen Alkoholen, insbesondere Polyesterdiole aus der Umsetzung von 1,6-Hexandiol oder Neopentylglykol mit Adipinsäure, Sebacinsäure oder Dodecandicarbonsäure,
- Polycarbonatpolyole, insbesondere aus der Umsetzung von 1,6-Hexandiol oder Neopentylglykol mit Dialkylcarbonaten, Diarylcarbonaten oder Phosgen,
- Mindestens zwei Hydroxylgruppen tragende Blockcopolymere Polyether-, Polyester- und/oder Polycarbonat-Blöcken, insbesondere Polyetherpolyesterpolyole,
- Polyacrylat- und Polymethacrylatpolyole,
- Polyhydroxyfunktionelle Fette und Öle,
- Polykohlenwasserstoffpolyole, insbesondere polyhydroxyfunktionelle Polyolefine, Polyisobutylene, Polyisoprene, Ethylen-Propylen-, Ethylen-Butylen- oder Ethylen-Propylen-Dien-Copolymere, Polymere von Dienen, oder Copolymere davon.

Geeignet sind insbesondere auch Mischungen von Polyolen.

Bevorzugt sind Polyetherpolyole, Polyesterpolyole, Polycarbonatpolyole, Poly-(meth)acrylatpolyole oder Polybutadienpolyole.

Besonders bevorzugt sind Polyetherpolyole, insbesondere Polyoxypropylendi- oder -triole oder Ethylenoxid-terminierte Polyoxypropylendi- oder -triole. Bevorzugt sind Polyole mit einem mittleren Molekulargewicht im Bereich von 400 bis 20'000 g/mol, bevorzugt von 1'000 bis 10'000 g/mol.

Bevorzugt sind Polyole mit einer mittleren OH-Funktionalität im Bereich von 1.6 bis 3.

Bevorzugt sind bei Raumtemperatur flüssige Polyole.

Für die Herstellung eines bei Raumtemperatur festen Polyurethanpolymers sind bei Raumtemperatur feste Polyole bevorzugt.

Das Isocyanatgruppen-haltige Polyurethanpolymer weist bevorzugt ein mittleres Molekulargewicht im Bereich von 1'000 bis 20'000 g/mol, insbesondere 1'500 bis 10'000 g/mol, auf.

Bevorzugt ist es bei Raumtemperatur flüssig.

Für eine Verwendung in einem Heissschmelzklebstoff ist ein bei Raumtemperatur festes Polyurethanpolymer bevorzugt, welches ausgehend von mindestens einem bei Raumtemperatur festen Polyol hergestellt ist. Ein geeignetes bei Raumtempeatur festes Polyol ist bei Raumtemperatur kristallin, teilkristallin oder amorph. Bevorzugt liegt sein Schmelzpunkt im Bereich von 50 bis 180 °C, insbesondere 70 bis 150 °C. Bevorzugt sind Polyesterpolyole oder Acrylatpolyole. Das Polyurethanpolymer wird insbesondere bei einer Temperatur oberhalb des Schmelzpunktes des bei Raumtemperatur festen Polymers hergestellt.

Bevorzugt enthält die Zusammensetzung mindestens ein Isocyanatgruppen-haltiges Polyurethanpolymer.

Zusätzlich zu einem Isocyanatgruppen-haltigen Polyurethanpolymer kann die Zusammensetzung weiterhin mindestens ein Diisocyanat und/oder ein Oligomer oder Polymer eines Diisocyanates enthalten, insbesondere ein IPDI-Isocyanurat oder ein TDI-Oligomer oder ein gemischtes Isocyanurat auf Basis TDI/HDI oder ein HDI-Oligomer oder eine bei Raumtemperatur flüssige Form von MDI.

Bevorzugt enthält die Zusammensetzung neben mindestens einem Aldiminosilan der Formel (I) und mindestens einem Polyisocyanat und/oder Isocyanatgruppen-haltigen Polyurethanpolymer zusätzlich einen oder mehrere weitere Bestandteile, welche insbesondere ausgewählt sind aus Katalysatoren, Füllstoffen, Weichmachern und Lösemitteln.

Geeignete Katalysatoren sind insbesondere Katalysatoren für die Hydrolyse von Aldiminogruppen, insbesondere organische Säuren, insbesondere aromatische Carbonsäuren wie Benzoesäure, 2-Nitrobenzoesäure oder Salicylsäure.

Geeignete Katalysatoren sind weiterhin Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Geeignet sind insbesondere auch Kombinationen von verschiedenen Katalysatoren.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononylcyclohexan-1,2-dicarboxylat (DINCH), Terephthalate, insbesondere Dioctylterephthalat, Trimellitate, Adipate, insbesondere Dioctyladipat, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Geeignete Lösemittel sind insbesondere Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), sowie Toluol, Xylol, Heptan, Octan, Naphtha, White Spirit, Petrolether oder Benzin, insbesondere Solvesso^{™}-Typen (von Exxon), weiterhin Methylenchlorid, Propylencarbonat, Butyrolacton, N-Methylpyrrolidon oder N-Ethylpyrrolidon.

Die Zusammensetzung kann weitere für Polyurethanzusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Farbstoffe;
- Trocknungsmittel, insbesondere Molekularsiebpulver, Calciumoxid, hochreaktive Isocyanate wie p-Tosylisocyanat, monomere Diisocyanate oder Orthoameisensäureester;
- weitere Haftvermittler, insbesondere weitere Silane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder weitere Iminosilane, oder oligomere Formen dieser Silane, oder Titanate;
- latente Härter oder Vernetzer, insbesondere Aldimine, Ketimine, Enamine, oder Oxazolidine;
- weitere Katalysatoren, welche die Reaktion der Isocyanatgruppen beschleunigen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester;
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in feuchtigkeitshärtenden Zusammensetzungen eingesetzte Substanzen.

Es kann sinnvoll sein, gewisse Substanzen vor dem Einmischen in die Zusammensetzung chemisch oder physikalisch zu trocknen.

Insbesondere kann die Zusammensetzung neben mindestens einem Aldiminosilan der Formel (I) Oxazolidine oder weitere Aldimine enthalten, insbesondere solche abgeleitet von Aldehyden der Formel (IV), insbesondere die bereits genannten Aldimine der Formel (V).

Bevorzugte weitere Aldimine sind insbesondere solche abgeleitet von aliphatischen oder arylaliphatischen Di- oder Triaminen und 2,2-Dimethyl-3-lauroyl-oxypropanal oder 2,2-Dimethyl-3-morpholinopropanal.

Die Zusammensetzung enthält bevorzugt einen Gehalt an Polyisocyanaten und Isocyanatgruppen-haltigen Polyurethanpolymeren im Bereich von 5 bis 90 Gewichts-%, insbesondere 10 bis 80 Gewichts-%.

Die Zusammensetzung enthält bevorzugt einen Gehalt an Aldiminosilanen der Formel (I) im Bereich von 0.01 bis 10 Gewichts-%, bevorzugt 0.1 bis 5 Gewichts-%, insbesondere 0.2 bis 2.5 Gewichts-%.

Die Zusammensetzung wird insbesondere unter Ausschluss von Feuchtigkeit hergestellt und bei Umgebungstemperatur in feuchtigkeitsdichten Gebinden aufbewahrt.

Die Zusammensetzung kann in Form einer einkomponentigen oder in Form einer mehrkomponentigen, insbesondere zweikomponentigen, Zusammensetzung vorliegen.

Als "einkomponentig" wird eine Zusammensetzung bezeichnet, bei welcher alle Bestandteile der Zusammensetzung im gleichen Gebinde vorliegen und welche als solche lagerstabil ist.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die Zusammensetzung ist bevorzugt einkomponentig. Sie ist bei geeigneter Verpackung und Aufbewahrung lagerstabil, typischerweise während mehreren Monaten bis zu einem Jahr oder länger.

Bei der Applikation der Zusammensetzung beginnt der Prozess der Aushärtung. Als Ergebnis davon entsteht die ausgehärtete Zusammensetzung.

Im Fall einer einkomponentigen Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator enthält oder freisetzt, zugemischt werden, oder die Zusammensetzung kann nach ihrer Applikation mit einer solchen Beschleuniger-Komponente in Kontakt gebracht werden.

Im Fall einer zweikomponentigen Zusammensetzung wird diese nach dem Vermischen der beiden Komponenten appliziert und beginnt dabei durch interne Reaktion auszuhärten, wobei die Aushärtung gegebenenfalls durch die Einwirkung von externer Feuchtigkeit vervollständigt wird. Das Vermischen der beiden Komponenten kann kontinuiertlich oder batchweise mit dynamischen Mischern oder Statikmischern erfolgen.

Bei der Aushärtung reagieren die Isocyanatgruppen unter dem Einfluss von Feuchtigkeit mit den aus dem Aldiminosilan der Formel (I) freigestzten Aminogruppen und gegebenenfalls vorhandenen weiteren hydrolysierenden Aldiminen oder Oxazolidinen. Weitere Isocyanatgruppen reagieren unter dem Einfluss von Feuchtigkeit untereinander und/oder mit gegebenenfalls in der Zusammensetzung vorhandenen weiteren Reaktivgruppen. Die vorhandenen Silangruppen hydrolysieren bei Kontakt mit Feuchtigkeit zu Silanolgruppen (Si-OH-Gruppen) und können durch nachfolgende Kondensationsreaktionen Siloxangruppen (Si-O-Si-Gruppen) bilden. Die Gesamtheit dieser zur Aushärtung der Zusammensetzung führenden Reaktionen der Isocyanatgruppen wird auch als Vernetzung bezeichnet.

Die zur Aushärtung einer einkomponentigen Zusammensetzung benötigte Feuchtigkeit gelangt bevorzugt aus der Luft (Luftfeuchtigkeit) durch Diffusion in die Zusammensetzung.

Die Zusammensetzung wird bevorzugt bei Umgebungstemperatur appliziert, insbesondere im Bereich von etwa 0 bis 50°C, bevorzugt im Bereich von 5 bis 40°C.

Die Aushärtung der Zusammensetzung erfolgt bevorzugt ebenfalls bei Umgebungstemperatur.

In einer Ausführungsform stellt die Zusammensetzung einen reaktiven Heissschmelzklebstoff dar. Ein Heissschmelzklebstoff wird bevorzugt im geschmolzenen Zustand bei einer Temperatur im Bereich von 80 bis 180 °C appliziert. Dabei ist die Geruchsfreiheit des aus dem Aldiminosilan der Formel (I) freigesetzten Aldehyds ein enormer Vorteil.

Bei der Aushärtung wird ein Aldehyd der Formel (IV) freigesetzt. Dieser ist weitgehend unflüchtig und geruchlos und verbleibt zum grössten Teil in der ausgehärteten Zusammensetzung. Dort verhält er sich bzw. wirkt wie ein Weichmacher. Als solcher kann er grundsätzlich selber migrieren und/oder die Migration von weiteren Weichmachern beeinflussen. Der Aldehyd der Formel (IV) ist mit der ausgehärteten Zusammensetzung sehr gut verträglich, migriert selber kaum und löst auch keine verstärkte Migration von Weichmachern aus.

Bevorzugt stellt die Zusammensetzung einen Klebstoff oder einen Dichtstoff oder eine Beschichtung dar.

Bevorzugt ist der Klebstoff oder Dichtstoff oder die Beschichtung elastisch.

Als Klebstoff und/oder Dichtstoff ist die Zusammensetzung insbesondere geeignet für Klebe- und Abdichtungsanwendungen, insbesondere in der Bau- und Fertigungsindustrie oder im Fahrzeugbau, insbesondere für die Parkettverklebung, Anbauteilverklebung, Hohlraumversiegelung, Montage, Modulverklebung, Karosserieverklebung, Scheibenverklebung oder Fugenabdichtung.

Als Beschichtung ist die Zusammensetzung geeignet zum Schutz von Böden oder Mauern, insbesondere als Beschichtung von Balkonen, Terrassen, Plätzen, Brücken, Parkdecks, oder zur Abdichtung von Dächern, oder im Innern von Gebäuden zur Wasserabdichtung, oder als Bodenbelag in Küchen, Industriehallen oder Fabrikationsräumen, oder als Abdichtung in Auffangwannen, Kanälen, Schächten oder Abwasserbehandlungsanlagen, oder zum Schutz von Oberflächen als Lack oder Versiegelung, oder als Vergussmasse zur Hohlraumversiegelung, als Nahtabdichtung oder als Schutzbeschichtung für beispielsweise Rohre.

Weiterhin bevorzugt stellt die Zusammensetzung einen Primer dar. Ein solcher wird eingesetzt zur Vorbehandlung von Substraten, als Haftbrücke zwischen dem Substrat und einer darauf zu applizierenden Zusammensetzung.

Der Primer enthält bevorzugt mindestens ein Lösemittel. Optional enthält der Primer weitere Bestandteile wie insbesondere Katalysatoren, weitere Silane, Titanate oder Zirkonate, oder gegebenenfalls Pigmente, Füllstoffe, Netzmittel, Silangruppen aufweisende Polyurethanpolymere oder Epoxidharze.

Der Primer wird üblicherweise so appliziert, dass nach dem Verdampfen der Lösemittel ein geschlossener Film in einer Schichtdicke im Bereich von einigen Mikrometern bis zu einigen Hundert Mikrometern auf dem Substrat verbleibt. Er wird typischerweise dazu verwendet, die Haftung zwischen einem Substrat und einem Klebstoff und/oder Dichtstoff oder einer Beschichtung zu verbessern, indem der Primerfilm sowohl zum Substrat als auch zu der auf den Primerfilm aufgebrachten härtbaren Zusammensetzung Haftung aufbauen kann.

Der Primer wird typischerweise mit einem Pinsel oder einer Rolle in dünner Schicht auf eine Substratoberfläche aufgebracht. Nach einer geeigneten Wartezeit, während welcher das Lösemittel teilweise oder vollständig verdunstet, wird der Klebstoff oder Dichtstoff oder die Beschichtung auf die so vorbehandelte Oberfläche aufgetragen und weist typischerweise eine verbesserte Haftung auf.

Geeignete Substrate, welche mit der Zusammensetzung verklebt, abgedichtet, beschichtet oder vorbehandelt werden können, sind insbesondere
- Glas, Glaskeramik, Beton, Mörtel, Faserzement, insbesondere Faserzement-Platten, Backstein, Ziegel, Gips, insbesondere Gips-Platten, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Applikation und Aushärtung der Zusammensetzung wird ein Artikel erhalten, welcher mit der Zusammensetzung verklebt oder abgedichtet oder beschichtet oder vorbehandelt ist.

Ein weiterer Gegenstand der Erfindung ist somit ein Artikel, welcher mit der Zusammensetzung verklebt oder abgedichtet oder beschichtet oder vorbehandelt ist.

Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, oder ein Anbauteil davon.

Die erfindungsgemässe Zusammensetzung zeichnet sich dadurch aus, dass sie besonders lagerstabil ist, d.h. sich auch bei längerer Lagerung und/oder erhöhten Lagerungs- oder Transporttemperaturen in ihren Eigenschaften über die Zeit wenig verändert und so wie vorgesehen anwendbar bleibt, insbesondere auch was ihre Fähigkeit zum Haftungsaufbau betrifft. Ihre Aushärtung verläuft ohne störende Geruchsimmissionen. Die Zusammensetzung baut eine erhöhte Haftung zu diversen Oberflächen auf, insbesondere solchen von anorganischen Substraten. Im ausgehärteten Zustand weist sie gute mechanische Eigenschaften auf und neigt nicht zum Ausschwitzen.

Ein weiterer Gegenstand der Erfindung ist ein Umsetzungsprodukt von mindestens einem Aldiminosilan der Formel (I).

Ein bevorzugtes Umsetzungsprodukt ist ein Produkt aus der Hydrolyse von mindestens einem Aldiminosilan der Formel (I). Ein solches Aldiminosilan weist eine oder zwei oder drei Silanol-Gruppen (Si-OH) auf.

Ein weiteres bevorzugtes Umsetzungsprodukt ist ein Kondensationsprodukt von mindestens einem Aldiminosilan der Formel (I) mit mindestens einem weiteren Silan. Dabei kann das weitere Silan ebenfalls ein Aldiminosilan der Formel (I) sein, oder es kann ein weiteres Silan sein, welches nicht der Formel (I) entspricht. Ein solches Kondensationsprodukt enthält mindestens eine Siloxanbindung Si-O-Si. Es ist insbesondere geeignet als Haftvermittler, auf dieselbe Weise wie für das Aldiminosilan der Formel (I) beschrieben.

Ein weiteres bevorzugtes Umsetzungsprodukt ist das Produkt aus der Hydrierung von mindestens einem Aldiminosilan der Formel (I) mit Wasserstoff. Dabei entsteht mindestens ein sekundäres Aminosilan der Formel (VI), 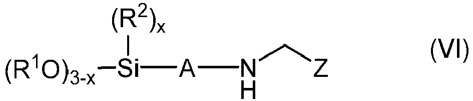 wobei R¹, R², x, A und Z die bereits genannten Bedeutungen aufweisen.

Ein sekundäres Aminosilan der Formel (VI) ist insbesondere geeignet als Haftvermittler oder als Vernetzer. Besonders geeignet ist es auch für die Herstellung von Silangruppen-aufweisenden Polymeren durch Umsetzung mit Isocyanatgruppen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1 °C und eine relative Luftfeuchtigkeit von 50±5% bezeichnet.

Die verwendeten Chemikalien waren, sofern nicht anders bezeichnet, von Sigma-Aldrich.

### Verwendete Aldehyde:

| | |
|---|---|
| Aldehyd-1: | Fraktioniertes Aldehydgemisch erhalten aus mittels HF-BF₃ katalysierter Formylierung von C₁₀₋₁₄-Alkylbenzol, enthaltend mehrheitlich verzweigte 4-(C₁₀₋₁₄-Alkyl)benzaldehyde. (mittleres Aldehyd-Equivalentgewicht 290 g/Eq) |

2,2-Dimethyl-3-lauroyloxypropanal

Der Aldehyd-1 ist ein Gemisch von Aldehyden der Formel (IV).

### Herstellung von Aldiminosilanen:

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

**Gaschromatogramme** (GC) wurden gemessen im Temperaturbereich von 60 bis 320 °C mit einer Aufheizrate von 15 °C/min und 10 min Verweilzeit bei 320 °C. Die Injektortemperatur betrug 250 °C. Es wurde eine Zebron ZB-5 Säule verwendet (L = 30 m, ID = 0.25 mm, dj = 0.5 µm) bei einem Gasfluss von 1.5 ml/min. Die Detektion erfolgte mittels Flammenionisation (FID).

Die **Viskosität** wurde mit einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹ für Viskositäten < 150 Pa s, Scherrate 1 s⁻¹ für Viskositäten > 150 Pa s) gemessen.

### Aldiminosilan A-1:

27.60 g Aldehyd-1 und 5.00 g wasserfreies Magnesiumsulfat wurden in einem Rundkolben unter Stickstoffatmosphäre vorgelegt. Dazu wurden unter Rühren und Kühlung langsam 16.18 g 3-Aminopropyltrimethoxysilan zugetropft. Dann wurde die Reaktionsmischung während 30 min bei 70 °C gerührt, das Magnesiumsulfat abfiltriert und dann am Rotationsverdampfer von flüchtigen Verbindungen befreit. Es wurde eine gelbliche Flüssigkeit mit einer Viskosität bei 20 °C von 146 mPa·s erhalten, welche eine mittels GC bestimmte Reinheit von 94.3 % (Retentionszeit 16.6-19.3 min) und einen Gehalt an nicht umgesetztem Aldehyd-1 von 3.0 % (Retentionszeit 12.3-14.8 min) aufwies.

FT-IR: 2955, 2923, 2870, 2853, 2734, 1705, 1646, 1608, 1571, 1508, 1457, 1418, 1377, 1342, 1302, 1248, 1189, 1102, 1087, 1027, 1018, 940, 881, 865, 825, 777, 722, 699.

### Aldiminosilan A-2:

Es wurde vorgegangen wie für Aldiminosilan **A-1** beschrieben, aber anstelle von 3-Aminopropyltrimethoxysilan wurden 20.00 g 3-Aminopropyltriethoxysilan eingesetzt. Es wurde eine gelbliche Flüssigkeit erhalten, welche eine mittels GC bestimmte Reinheit von 90.5 % (Retentionszeit 16.6-19.3 min) und einen Gehalt an nicht umgesetztem Aldehyd-1 von 1.5 % (Retentionszeit 12.3-14.8 min) aufwies.

FT-IR: 2957, 2923, 2872, 2854, 2733, 1706, 1647, 1609, 1571, 1509, 1456, 1419, 1389, 1378, 1342, 1300, 1248, 1223, 1211, 1166, 1102, 1080, 1018, 991, 954, 878, 863, 827, 790, 775, 722.

### Aldiminosilan R-1:

Es wurde vorgegangen wie für Aldiminosilan **A-1** beschrieben, aber anstelle von Aldehyd-1 wurden 27.00 g 2,2-Dimethyl-3-lauroyloxypropanal eingesetzt. Es wurde eine gelbliche Flüssigkeit erhalten.

Die Aldiminosilane **A-1** und **A-2** sind erfindungsgemässe Aldiminosilane der Formel (I). Das Aldiminosilan **R-1** ist ein Vergleichsbeispiel gemäss WO 2005/058921.

### Herstellung von Isocyanatgruppen-haltigen Polymeren

### Polymer P1:

400 g Polyoxypropylen-Diol (Acclaim^{®} 4200, von Covestro; OH-Zahl 28.5 mg KOH/g) und 52 g 4,4'-Diphenylmethandiisocyanat (Desmodur^{®} 44 MC L, von Covestro) wurden nach bekanntem Verfahren bei 80 °C zu einem bei Raumtemperatur flüssigen, NCO-terminierten Polyurethanpolymer mit einem Gehalt an freien Isocyanatgruppen von 1.85 Gewichts-% und einer Viskosität bei 20°C von 35.9 Pa s umgesetzt.

### Verwendung als Haftvermittler

### Aktivator-1

2.5 g Aldiminosilan **A-1** wurden in 250 g trockenem Ethylacetat gelöst und unter Ausschluss von Feuchtigkeit aufbewahrt.

### Aktivator-2

2.5 g Aldiminosilan **A-2** wurden in 250 g trockenem Ethylacetat gelöst und unter Ausschluss von Feuchtigkeit aufbewahrt.

### Zusammensetzung Z-1

1.5 g Aldiminosilan **A-1** wurden unter Stickstoffatmosphäre mit 150 g Polymer **P1** vermischt und unter Ausschluss von Feuchtigkeit aufbewahrt. Die vermischte Zusammensetzung hatte nach einem Tag im Normklima eine Viskosität bei 20°C von 36.4 Pa s. Nach einer Lagerung im verschlossenen Gebinde während 7 Tagen in einem Umluftofen bei 60°C betrug die Viskosität 44.3 Pa s bei 20°C.

### Zusammensetzung Z-2

1.5 g Aldiminosilan **A-2** wurden unter Stickstoffatmosphäre mit 150 g Polymer **P1** vermischt und unter Ausschluss von Feuchtigkeit aufbewahrt.

Als Mass für die Wirkung als Haftvermittler wurden zwei Glasplatten (Floatglas; Firma Rocholl, Schönbrunn, Deutschland) mit den Massen 10 × 15 cm auf der Luftseite längsseitig so mit Distanzband-beklebt, dass drei Glasbahnen von je 2 × 8 cm erhalten wurden. Die erste und die zweite Bahn wurden jeweils einmal mit einem mit Ethylacetat benetzten Hygienetuch abgewischt. Die dritte Bahn wurde einmal mit einem mit dem **Aktivator-1** bzw. dem **Aktivator-2** benetzten Hygienetuch abgewischt. Anschliessend wurden die so behandelten Glasplatten während 2 h im Normklima zum Ablüften gelagert. Dann wurden auf der ersten und der dritten Bahn jeweils 6 g Polymer **P1** in einer Schichtdicke von ca. 3 mm aufgetragen. Auf der zweiten Bahn wurden 6 g der Zusammensetzung **Z-1** bzw. der Zusammensetzung **Z-2** in einer Schichtdicke von ca. 3 mm aufgetragen.

Die so beschichteten Glasplatten wurden während 7 Tagen im Normklima aufbewahrt und anschliessend versucht, die ausgehärteten Polymerfilme von der Glasplatte zu lösen. Als "sehr gut" wurde die Haftung bezeichnet, wenn das ausgehärtete Polymer nicht vom Glasuntergrund abgezogen werden konnte. (Auch nach mehreren Schnitten quer zur Bahnrichtung bis auf den Glasuntergrund, mit welchen das Polymer vom Glas weggeschnitten wurde, und senkrecht nach oben gerichtetem Wegziehen der Polymerbahn liess sich das Polymer nicht vom Glasuntergrund lösen.) Als "keine" wurde die Haftung bezeichnet, wenn das ausgehärtete Polymer vollständig vom Glasuntergrund abgelöst werden konnte.

Die Resultate sind in den Tabellen 1 und 2 dargestellt.

**Tabelle 1**

| **Vorbehandlung** | **Polymer-Bahn** | **Haftung** |
|---|---|---|
| Ethylacetat | Polymer **P1** | keine |
| Ethylacetat | Zusammensetzung **Z-1** | sehr gut |
| **Aktivator-1** | Polymer **P1** | sehr gut |

**Tabelle 2**

| **Vorbehandlung** | **Polymer-Bahn** | **Haftung** |
|---|---|---|
| Ethylacetat | Polymer **P1** | keine |
| Ethylacetat | Zusammensetzung **Z-2** | sehr gut |
| **Aktivator-2** | Polymer **P1** | sehr gut |

### Primer-Zusammensetzungen Z-3 und Z-4:

125.0 g Sika^{®} Primer-209 N (pigmentierter Isocyanatgruppen-haltiger Primer, von Sika Schweiz AG) wurden mit 11.09 g Aldiminosilan **A-1** (= Primer-Zusammensetzung **Z-3**) bzw. 10.94 g Aldiminosilan **R-1** (= Primer-Zusammensetzung **Z-4**) vermischt und unter Ausschluss von Feuchtigkeit aufbewahrt.

### Beispiele 1 bis 3:

Die Primer-Zusammensetzungen **Z-3** und **Z-4** wurden verwendet als Haftvermittler auf Glas, wobei nach einer langen Ablüftzeit von 30 Stunden bzw. 7 Tagen Sikaflex^{®}-250 DM-5 (einkomponentiger feuchtigkeitshärtender Polyurethanklebstoff, von Sika Schweiz AG) aufgetragen und nach der Aushärtung dessen Haftung geprüft wurde. Als Referenz wurde Sika^{®} Primer-209 N eingesetzt.

Für jede Prüfung wurde eine Glasplatte mit Isopropanol gereinigt, mit einem mit Sika^{®} Aktivator-100 (Haftreiniger, von Sika Schweiz AG) getränkten Hygienetuch abgewischt und nach einer Ablüftzeit von 10 min die jeweilige Primer-Zusammensetzung in dünner Schicht mit einem Schwamm aufgetragen. Nach einer Ablüftzeit von 32 Stunden bzw. 7 Tagen im Normklima wurde der auf 60 °C vorgewärmte Sikaflex^{®}-250 DM-5 in Form einer Dreiecksraupe von 10 mm Breite und 100 mm Länge auf die Primer-Schicht appliziert und die Glasplatte während 7 Tagen im Normklima gelagert, wobei der applizierte Klebstoff aushärtete. Anschliessend wurde die Haftung der Klebstoff-Raupe auf der Glasplatte getestet, indem die Raupe am Ende knapp über der Klebefläche eingeschnitten, das eingeschnittene Ende der Raupe mit einer Rundzange festgehalten und versucht wurde, die Raupe vom Untergrund wegzuziehen. Dann wurde die Raupe erneut bis auf den Untergrund eingeschnitten, wobei der freigeschnittene Teil der Raupe mit der Rundzange aufgerollt und wiederum versucht wurde, die Raupe vom Untergrund abzuziehen. So wurde die Raupe auf einer Länge von 80 mm ziehend vom Untergrund weggeschnitten. Anschliessend wurde anhand des Bruchbildes die Haftung nach folgender Skala beurteilt.
1 (= sehr gut) steht für mehr als 95% Kohäsionsbruch
2 (= gut) steht für 75 bis 95% Kohäsionsbruch
3 (= mässig) steht für 25 bis 75% Kohäsionsbruch
4 (= schlecht) steht für weniger als 25% Kohäsionsbruch
5 (= keine Haftung) steht für 0% Kohäsionsbruch bzw. 100% Adhäsionsbruch

Die Resultate sind in der Tabelle 3 angegeben.

Die mit (Ref.) bezeichneten Beispiele **2** und **3** sind Vergleichsbeispiele.

**Tabelle 3**

| **Beispiel:** | | **1** | **2** (Ref.) | **3** (Ref.) |
|---|---|---|---|---|
| Primer-Zusammensetzung | | **Z-3** | **Z-4** | Sika^{®} Primer-209 N |
| Haftung von Sikaflex^{®} | Ablüftzeit: | | | |
| | 32h | 1 | 1 | 2 |
| 250 DM-5 | 7d | 1 | 5 | 1 |

## Patentansprüche

1. Aldiminosilan der Formel (I), 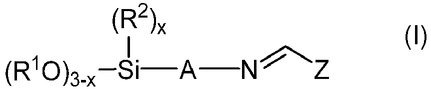 wobei
x für 0 oder 1 oder 2 steht,
R¹ für einen einwertigen, gegebenenfalls Ethergruppen aufweisenden aliphatischen oder cycloaliphatischen oder arylaliphatischen Kohlenwasserstoff-Rest mit 1 bis 12 C-Atomen steht,
R² für einen einwertigen Kohlenwasserstoff-Rest mit 1 bis 12 C-Atomen steht,
A für einen gegebenenfalls Ether-Sauerstoff oder Amin-Stickstoff aufweisenden Alkylen-Rest mit 1 bis 12 C-Atomen steht, und
Z für einen mit einer Alkyl- oder Alkoxy-Gruppe substituierten Aryl-Rest mit insgesamt 12 bis 26 C-Atomen steht,
**dadurch gekennzeichnet, dass** Z für einen Rest der Formel (II) steht, 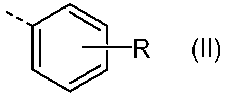
wobei R ausgewählt ist aus mehrheitlich verzweigten 4-Decyl-, 4-Undecyl-, 4-Dodecyl-, 4-Tridecyl- und 4-Tetradecyl-Resten.

2. Aldiminosilan gemäss Anspruch 1, **dadurch gekennzeichnet, dass** R¹ für Methyl oder Ethyl steht.

3. Aldiminosilan gemäss einem der Ansprüche 1 oder 2, **dadurch gekennzeichnet, dass** A ausgewählt ist aus der Gruppe bestehend aus Methylen, 1,3-Propylen, 4-Aza-1,6-hexylen, 4,7-Diaza-1,9-nonylen, 2-Methyl-1,3-propylen, 1,4-Butylen, 3-Methyl-1,4-butylen und 3,3-Dimethyl-1,4-butylen, wobei die Nummerierung vom Siliciumatom ausgeht.

4. Verfahren zur Herstellung von Aldiminosilanen gemäss einem der Ansprüche 1 bis 3, bei welchem
- mindestens ein Aminosilan der Formel (III) mit mindestens einem Aldehyd der Formel (IV) zu einer Reaktionsmischung vereint wird, wobei der Aldehyd in Bezug auf die primäre Aminogruppe des Aminosilans stöchiometrisch oder im stöchiometrischen Überschuss eingesetzt wird, 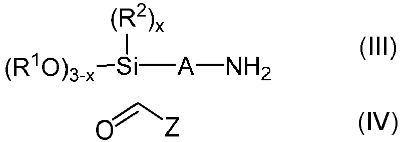
- und das Kondensationswasser mit einer geeigneten Methode aus der Reaktionsmischung entfernt wird, gegebenenfalls unter deren Erwärmen,
wobei x, R¹, R², A und Z die in den Ansprüchen 1 bis 3 beschriebenen Bedeutungen aufweisen.

5. Verfahren zur Herstellung von Aldiminosilanen gemäss einem der Ansprüche 1 bis 3, bei welchem
- mindestens ein Aldehyd der Formel (IV) zuerst mit einem flüchtigen primären Monoamin zu einer Reaktionsmischung vereint wird, wobei der Aldehyd in Bezug auf die primäre Aminogruppe stöchiometrisch oder im stöchiometrischen Unterschuss eingesetzt wird, 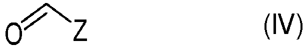
- das Kondensationswasser und gegebenenfals der Amin-Überschuss mit einer geeigneten Methode aus der Reaktionsmischung entfernt wird, gegebenenfalls unter deren Erwärmen,
- dann das erhaltene Aldimin-Zwischenprodukt mit mindestens einem Aminosilan der Formel (III) zu einer Reaktionsmischung vereint wird, wobei das Aminosilan in Bezug auf die Aldiminogruppe des Aldimin-Zwischenprodukts stöchiometrisch oder im stöchiometrischen Überschuss eingesetzt wird, 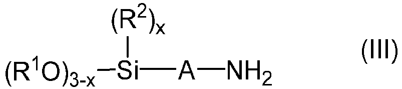
- und schliesslich die Reaktionsmischung erwärmt wird und das dabei freigesetzte flüchtige primäre Monoamin und gegebenenfalls der Aminosilan-Überschuss mit einer geeigneten Methode aus der Reaktionsmischung entfernt wird, insbesondere unter Vakuum,
wobei x, R¹, R², A und Z die in den Ansprüchen 1 bis 3 beschriebenen Bedeutungen aufweisen.

6. Verwendung von mindestens einem Aldiminosilan gemäss einem der Ansprüche 1 bis 3 als Haftvermittler und/oder Vernetzer.

7. Zusammensetzung umfassend
- mindestens ein Aldiminosilan gemäss einem der Ansprüche 1 bis 3,
- und mindestens ein Monomer und/oder Polymer mit vernetzungsfähigen Reaktivgruppen.

8. Zusammensetzung gemäss Anspruch 7, **dadurch gekennzeichnet, dass** sie eine Isocyanatgruppen-haltige Zusammensetzung umfassend mindestens ein Polyisocyanat und/oder mindestens ein Isocyanatgruppen aufweisendes Polymer ist.

9. Zusammensetzung gemäss Anspruch 8 oder 9, **dadurch gekennzeichnet, dass** sie einen Klebstoff oder einen Dichtstoff oder eine Beschichtung darstellt.

10. Zusammensetzung gemäss Anspruch 8 oder 9, **dadurch gekennzeichnet, dass** sie einen Primer darstellt.

11. Artikel, welcher mit der Zusammensetzung gemäss einem der Ansprüche 8 bis 10 verklebt oder abgedichtet oder beschichtet oder vorbehandelt ist.

12. Umsetzungsprodukt von mindestens einem Aldiminosilan gemäss einem der Ansprüche 1 bis 3, wobei das Umsetzungsprodukt ein Hydrolyseprodukt, ein Kondensationsprodukt oder ein Produkt aus der Hydrierung mit Wasserstoff darstellt.

## Claims

1. Aldiminosilane of the formula (I) 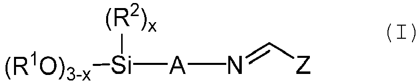 where
x is 0 or 1 or 2,
R¹ is a monovalent aliphatic or cycloaliphatic or arylaliphatic hydrocarbyl radical optionally containing ether groups and having 1 to 12 carbon atoms,
R² is a monovalent hydrocarbyl radical having 1 to 12 carbon atoms,
A is an alkylene radical optionally having ether oxygen or amine nitrogen and having 1 to 12 carbon atoms, and
Z is an aryl radical substituted by an alkyl or alkoxy group and having a total of 12 to 26 carbon atoms,
**characterized in that** Z is a radical of the formula (II) 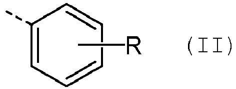
where R is selected from mainly branched 4-decyl, 4-undecyl, 4-dodecyl, 4-tridecyl and 4-tetradecyl radicals.

2. Aldiminosilane according to Claim 1, **characterized in that** R¹ is methyl or ethyl.

3. Aldiminosilane according to either of Claims 1 and 2, **characterized in that** A is selected from the group consisting of methylene, 1,3-propylene, 4-aza-1,6-hexylene, 4,7-diaza-1,9-nonylene, 2-methyl-1,3-propylene, 1,4-butylene, 3-methyl-1,4-butylene and 3,3-dimethyl-1,4-butylene, where the numbering starts from the silicon atom.

4. Process for preparing aldiminosilanes according to any of Claims 1 to 3, in which
- at least one aminosilane of the formula (III) is combined with at least one aldehyde of the formula (IV) to form a reaction mixture, using the aldehyde stoichiometrically or in stoichiometric excess in relation to the primary amino group of the aminosilane, 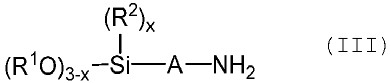 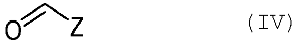
- and the water of condensation is removed from the reaction mixture by a suitable method, optionally with heating thereof,
where x, R¹, R², A and Z have the definitions described in Claims 1 to 3.

5. Process for preparing aldiminosilanes according to any of Claims 1 to 3, in which
- at least one aldehyde of the formula (IV) is first combined with a volatile primary monoamine to form a reaction mixture, using the aldehyde stoichiometrically or in stoichiometric excess in relation to the primary amino group, 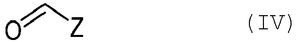
- the water of condensation and any excess amine are removed from the reaction mixture by a suitable method, optionally with heating thereof,
- then the resulting aldimine intermediate is combined with at least one aminosilane of the formula (III) to form a reaction mixture, using the aminosilane stoichiometrically or in stoichiometric excess in relation to the aldimino group of the aldimine intermediate, 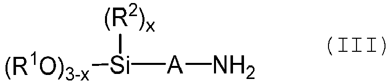
- and finally the reaction mixture is heated and the volatile primary monoamine released and any excess aminosilane is removed from the reaction mixture by a suitable method, especially under reduced pressure,
where x, R¹, R², A and Z have the definitions described in Claims 1 to 3.

6. Use of at least one aldiminosilane according to any of Claims 1 to 3 as adhesion promoter and/or crosslinker.

7. Composition comprising
- at least one aldiminosilane according to any of Claims 1 to 3,
- and at least one monomer and/or polymer having crosslinkable reactive groups.

8. Composition according to Claim 7, **characterized in that** it is a composition containing isocyanate groups that comprises at least one polyisocyanate and/or at least one polymer containing isocyanate groups.

9. Composition according to Claim 8 or 9,
**characterized in that** it is an adhesive or a sealant or a coating.

10. Composition according to Claim 8 or 9,
**characterized in that** it is a primer.

11. Article bonded or sealed or coated or pretreated with the composition according to any of Claims 8 to 10.

12. Reaction product of at least one aldiminosilane according to any of Claims 1 to 3, wherein the reaction product is a hydrolysis product, a condensation product or a product of hydrogenation with hydrogen.

## Revendications

1. Aldiminosilane de formule (I), 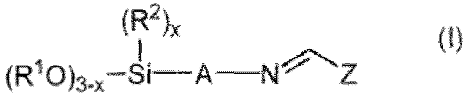
x représentant 0 ou 1 ou 2,
R¹ représentant un radical hydrocarboné aliphatique ou cycloaliphatique ou arylaliphatique, monovalent, présentant éventuellement des groupes éther, comportant 1 à 12 atomes de C,
R² représentant un radical hydrocarboné monovalent comportant 1 à 12 atomes de C,
A représentant un radical alkylène comportant 1 à 12 atomes de C présentant éventuellement un oxygène d'éther ou un azote d'amine, et
Z représentant un radical aryle substitué par un groupe alkyle ou alcoxy, comportant au total 12 à 26 atomes de C,
**caractérisé en ce que** Z représente un radical de formule (II), 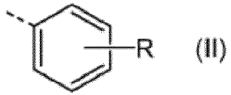
R étant choisi parmi des radicaux 4-décyle, 4-undécyle, 4-dodécyle, 4-tridécyle et 4-tétradécyle majoritairement ramifiés.

2. Aldiminosilane selon la revendication 1, **caractérisé en ce que** R¹ représente méthyle ou éthyle.

3. Aldiminosilane selon l'une quelconque des revendications 1 et 2, **caractérisé en ce que** A est choisi dans le groupe constitué par méthylène, 1,3-propylène, 4-aza-1,6-hexylène, 4,7-diaza-1,9-nonylène, 2-méthyl-1,3-propylène, 1,4-butylène, 3-méthyl-1,4-butylène et 3,3-diméthyl-1,4-butylène, la numérotation commençant à partir de l'atome de silicium.

4. Procédé de préparation d'aldiminosilanes selon l'une quelconque des revendications 1 à 3, dans lequel
- au moins un aminosilane de formule (III) est réuni avec au moins un aldéhyde de formule (IV) pour donner un mélange réactionnel, l'aldéhyde étant utilisé en quantité stœchiométrique ou en excès stœchiométrique par rapport au groupe amino primaire de l'aminosilane, 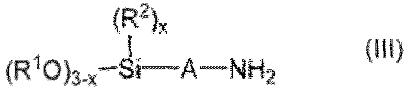 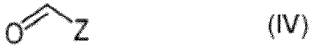
- et l'eau de condensation est évacuée du mélange réactionnel par une méthode appropriée, éventuellement en le chauffant,
x, R¹, R², A et Z présentant les significations décrites dans les revendications 1 à 3.

5. Procédé de préparation d'aldiminosilanes selon l'une quelconque des revendications 1 à 3, dans lequel
- au moins un aldéhyde de formule (IV) est tout d'abord réuni avec une monoamine primaire volatile pour donner un mélange réactionnel, l'aldéhyde étant utilisé en quantité stœchiométrique ou en défaut stœchiométrique par rapport au groupe amino primaire, 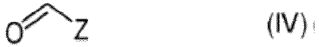
- l'eau de condensation et éventuellement l'excès d'amine sont évacués du mélange réactionnel par une méthode appropriée, éventuellement en le chauffant,
- ensuite le produit intermédiaire d'aldimine obtenu est réuni avec au moins un aminosilane de formule (III) pour donner un mélange réactionnel, l'aminosilane étant utilisé en quantité stœchiométrique ou en excès stœchiométrique par rapport au groupe aldimino du produit intermédiaire d'aldimine, 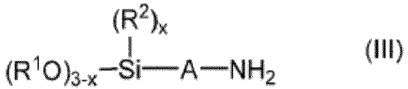
- et enfin le mélange réactionnel est chauffé et la monoamine primaire volatile alors libérée et éventuellement l'excès d'aminosilane sont évacués du mélange réactionnel avec une méthode appropriée, en particulier sous vide,
x, R¹, R², A et Z présentant les significations décrites dans les revendications 1 à 3.

6. Utilisation d'au moins un aldiminosilane selon l'une quelconque des revendications 1 à 3 en tant que promoteur d'adhérence et/ou agent de réticulation.

7. Composition comprenant
- au moins un aldiminosilane selon l'une quelconque des revendications 1 à 3,
- et au moins un monomère et/ou polymère comportant des groupes réactifs capables de réticulation.

8. Composition selon la revendication 7, **caractérisée en ce qu'**elle est une composition contenant des groupes isocyanate comprenant au moins un polyisocyanate et/ou au moins un polymère présentant des groupes isocyanate.

9. Composition selon la revendication 8 ou 9, **caractérisée en ce qu'**elle représente un adhésif ou un agent d'étanchéité ou un revêtement.

10. Composition selon la revendication 8 ou 9, **caractérisée en ce qu'**elle représente un apprêt.

11. Article qui est collé ou étanchéifié ou revêtu ou prétraité par la composition selon l'une quelconque des revendications 8 à 10.

12. Produit de transformation d'au moins un aldiminosilane selon l'une quelconque des revendications 1 à 3, le produit de transformation représentant un produit d'hydrolyse, un produit de condensation ou un produit de l'hydrogénation avec de l'hydrogène.
